# EUROPEAN PATENT APPLICATION

(11) **EP 3 404 857 A1**
(43) Date of publication of application: **21.11.2018**
(21) Application number: 17889531.4
(22) Date of filing: 02.03.2017
(51) Int. Cl.: H04B 10/69

(54) **INFRARED RECEIVER AND INFRARED SIMULTANEOUS INTERPRETATION SYSTEM**

(71) Applicant: Shenzhen Taiden Industrial Co., Ltd., Nanshan District, Shenzhen Guangdong 518000 (CN)
(72) Inventor: ZHOU, Qingxu, Shenzhen Guangdong 518000 (CN); ZHANG, Zhishuo, Shenzhen Guangdong 518000 (CN)
(74) Representative: Flügel Preissner Schober Seidel
(86) International application number: PCT/CN2017/075375
(87) International publication number: WO 2018/157340

(57) **Abstract**

An infrared receiver and an infrared simultaneous interpretation system are disclosed. In the infrared receiver, a central controller (3) is configured to control a local oscillation signal generation module (101) to output a local oscillation signal to a first mixer (102) and a second mixer (104); the first mixer is configured to receive a preprocessed subcarrier combined signal, mix the preprocessed subcarrier combined signal with the local oscillation signal, and output a first sum-difference frequency signal to a bandpass filter (103); the bandpass filter (103) is configured to filter the first sum-difference frequency signal and output an intermediate frequency signal to the second mixer (104); the second mixer (104) is configured to mix the intermediate frequency signal with the local oscillation signal and output a second sum-difference frequency signal to a low pass filter module (105); and the low pass filter module (105) is configured to filter the second sum-difference frequency signal and output a single-path subcarrier signal to the infrared processing chip (7), thereby economically and practically solving the problem that the existing infrared receiver has poor reception of the high frequency band subcarrier.

## Description

### TECHINCAL FIELD

The present application relates to the technical field of simultaneous interpretation, and more particularly to an infrared receiver and an infrared simultaneous interpretation system.

### BACKGROUND

As an effective communication tool, a simultaneous interpretation system is widely used in different fields including international high-end conferences, diplomatic affairs, business negotiations, and international arbitration. An infrared simultaneous interpretation system has become a mainstream in the simultaneous interpretation system due to its good confidentiality, anti-jamming performance, and easy installation.

The existing infrared interpretation system generally includes: multiple paths of audio signal sources, an infrared emission host, an infrared radiation unit, and infrared receivers. The infrared emission host converts audio signals output from the audio signal sources into subcarriers of different frequencies. The subcarriers of different frequencies are combined by a combiner and then transmitted to the infrared radiation unit. After the infrared radiation unit converts the electrical signal into an infrared light signal, the infrared light signal is emitted. The infrared receivers receive the infrared light signal emitted from the infrared radiation unit, convert the infrared light signal into audio signal, and output the audio signal.

As a main audio receiving device, the infrared receiver mainly includes: infrared receiving tubes for receiving the infrared light signal and converting the infrared light signal into the electrical signal; a signal preprocessing electric module for performing signal amplification, filter, and analog-to-digital conversion; an infrared processing chip for performing frequency conversion, digital demodulation, and decoding to convert the signal into the digital audio signal; an analog-to-digital conversion module for converting the digital audio signal into an analog audio signal and transmitting the analog audio signal to a voice player; the voice player; and a central controller for providing control signals for the above-mentioned infrared processing chip and analog-to-digital conversion module.

However, an infrared transmitting tube of the existing infrared radiation unit and the infrared receiving tube of the infrared receiver have junction capacitances, which makes an attenuation amplitude of the high-frequency subcarriers greater than that of the low-frequency subcarriers. Because the analog-to-digital conversion circuits in the signal preprocessing module and the infrared processing chip have limited accuracies, the multiple paths of the subcarriers of different frequencies are synthesized by the combiner and then directly transmitted to the analog-to-digital conversion circuits, which reduces the quantization accuracy of the high-frequency subcarriers, thereby resulting in poor reception of high frequency subcarriers by the infrared receiver.

Therefore, the existing infrared receiver has the problem of poor reception of the high frequency subcarriers.

### SUMMARY

The present application provides an infrared receiver and an infrared simultaneous interpretation system, aiming at solving the problem that the existing infrared receiver has poor reception of high frequency subcarriers.

A first aspect of the present application provides an infrared receiver. The infrared receiver comprises: a central controller, a signal receiving module, a signal preprocessing module, an infrared processing chip, a digital-to-analog converting module, and a voice player. The signal receiving module is configured to receive an infrared signal and convert the infrared signal into a subcarrier combined signal, which is then preprocessed and output from the signal preprocessing module. The central controller is configured to control the infrared processing chip to process the received signal and output a corresponding digital audio signal to the digital-to-analog converting module, and the digital-to-analog converting module is configured to convert the digital audio signal into an analog audio signal and output the analog audio signal to the voice player for voice playing. The infrared receiver further comprises an analog frequency selection circuit.

The analog frequency selection circuit comprises: a local oscillation signal generation module, a first mixer, a bandpass filter, a second mixer, and a low pass filter module.

The central controller is configured to control the local oscillation signal generation module to output a local oscillation signal to the first mixer and the second mixer according to a received audio channel selection command; the first mixer is configured to receive the subcarrier combined signal preprocessed by the signal preprocessing module, mix the preprocessed subcarrier combined signal with the local oscillation signal, and output a first sum-difference frequency signal to the bandpass filter; the bandpass filter is configured to filter the first sum-difference frequency signal and output an intermediate frequency signal corresponding to a center frequency of the bandpass filter to the second mixer; the second mixer is configured to mix the intermediate frequency signal with the local oscillation signal and output a second sum-difference frequency signal to the low pass filter module; and the low pass filter module is configured to filter the second sum-difference frequency signal and outputs a single-path subcarrier signal to the infrared processing chip.

A second aspect of the present application provides an infrared simultaneous interpretation system. The infrared simultaneous interpretation system comprises at least one audio signal source, an infrared emission host, and an infrared radiation unit, and the infrared simultaneous interpretation system further comprises the above infrared receiver.

In the present application, the central controller, according to the audio channel selection command sent from the audio channel selecting key, controls the local oscillation signal generation module to output the local oscillation signal to the first mixer and the second mixer. The first mixer receives the subcarrier combined signal preprocessed by the signal preprocessing module, mixes the preprocessed subcarrier combined signal with the local oscillation signal, and outputs the first sum-difference frequency signal to the bandpass filter. The bandpass filter filters the first sum-difference frequency signal and outputs the intermediate frequency signal corresponding to a center frequency of the bandpass filter to the second mixer; the second mixer mixes the intermediate frequency signal with the local oscillation signal and outputs second sum-difference frequency signal to the low pass filter module. The low pass filter module filters the second sum-difference frequency signal and outputs the single-path subcarrier signal to the infrared processing chip. In the present application, both the two frequency conversion processes adopt the same local oscillation signal, which not only can lower the production cost of the infrared receiver, but also can avoid the problem that the use of different local oscillation signals causes errors. In the present application, the signal path subcarrier signal of desired frequency can be obtained by the analog frequency selection circuit, so as to avoid the problem that the quantification accuracy of the high frequency band subcarrier would be reduced when the subcarrier combined signal is performed with analog-to-digital conversion by the analog-to-digital converting module within the infrared processing chip, thereby solving the defect that the infrared receiver has poor reception of the high frequency band subcarrier. In the meanwhile, based on the second frequency conversion of the second mixer, the analog frequency selection circuit of the present application further converts the intermediate frequency signal into the single-path subcarrier signal having a relatively low frequency (the original frequency of the subcarrier) and transmit the single-path subcarrier signal to the infrared processing chip. Therefore, the analog-to-digital converting module within the infrared processing chip can work at relatively low frequency (the original frequency of the subcarrier) without increasing the power consumption of the infrared processing chip, thereby solving the problem of poor reception of the high frequency band subcarrier while not increasing the power consumption of the whole infrared receiver. Thus, the infrared receiver provided by the present application can solve the problem of poor reception of the high frequency band subcarrier and is also economical and practical.

### BRIEF DESCRIPTION OF THE DRAWINGS

In order to more clearly illustrate the technical solutions in embodiments of the present application, the drawings used in the description of the embodiments will be briefly described below. Obviously, the drawings in the following description are merely some embodiments of the present application. For those skilled in the art, other drawings may also be obtained based on these drawings without any creative work.
FIG. 1 is a modular structure diagram of an infrared receiver provided by an embodiment of the present application;
FIG. 2 is another modular structure diagram of an infrared receiver provided by an embodiment of the present application;
FIG. 3 is a circuit structure diagram of an infrared receiver according to an embodiment of the present application;
FIG. 4 is another circuit structure diagram of an infrared receiver provided by an embodiment of the present application.

### DETAILED DESCRIPTION OF THE EMBODIMENTS

In order to make the purposes, technical solutions, and advantages of the present application clearer and more understandable, the present application will be further described in detail hereinafter with reference to the accompanying drawings and embodiments. It should be understood that the embodiments described herein are only intended to illustrate but not to limit the present application.

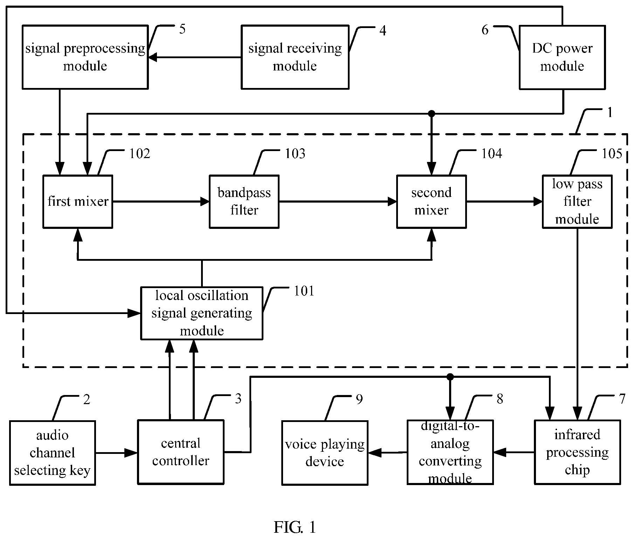

FIG. 1 shows a modular structure of an infrared receiver provided by an embodiment of the present application, for facilitating the description, only those related to embodiments of the present application are shown, which are described as follows:
The infrared receiver is applied to an infrared simultaneous interpretation system for receiving an infrared signal transmitted from an infrared radiation unit in the infrared simultaneous interpretation system. The infrared receiver comprises: a central controller 3, a signal receiving module 4, a signal preprocessing module 5, an infrared processing chip 7, a digital-to-analog converting module 8, and a voice player 9. A user of the infrared receiver can select a desired audio channel by an audio channel selecting key 2, as shown in FIG. 1, the audio channel selecting key 2 is connected to the central controller, the user sends an audio channel selection command by the audio channel selecting key 2 to the central controller 3. The signal receiving module 4 receives an infrared signal and converts the infrared signal into a subcarrier combined signal, which is then preprocessed and output from the signal preprocessing module 5. The central controller 3, according to the audio channel selection command sent by audio channel selecting key 2, controls the infrared processing chip 7 to process a received signal and output a corresponding digital audio signal to the digital-to-analog converting module 8, and the digital-to-analog converting module 8 converts the digital audio signal into an analog audio signal and output the analog audio signal to the voice player 9 for voice playing.

The infrared receiver further comprises an analog frequency selection circuit 1, and the analog frequency selection circuit 1 comprises: a local oscillation signal generation module 101, a first mixer 102, a bandpass filter 103, a second mixer 104, and a low pass filter module 105. The user sends the audio channel selection command to the central controller 3 via the audio channel selecting key 2. The central controller 3, according to the audio channel selection command sent from the audio channel selecting key 2, controls the local oscillation signal generation module 101 to output a local oscillation signal to the first mixer 102 and the second mixer 104. The first mixer 102 receives the subcarrier combined signal preprocessed by the signal preprocessing module 5, mixes the preprocessed subcarrier combined signal with the local oscillation signal, and outputs a first sum-difference frequency signal to the bandpass filter 103. The bandpass filter 103 filters the first sum-difference frequency signal and outputs an intermediate frequency signal corresponding to a center frequency of the bandpass filter 103 to the second mixer 104; the second mixer 104 mixes the intermediate frequency signal with the local oscillation signal and outputs a second sum-difference frequency signal to the low pass filter module 105. The low pass filter module 105 filters the second sum-difference frequency signal and outputs a single-path subcarrier signal to the infrared processing chip 7. The central controller 3, according to the received audio channel selection command, controls the infrared processing chip 7 to process the received single-path subcarrier signal and outputs the corresponding digital audio signal to the digital-to-analog converting module 8, and the digital-to-analog converting module 8 converts the digital audio signal into the analog audio signal and outputs the analog audio signal to the voice player 9 for voice playing.

In an embodiment of the present application, a first input terminal and a second input terminal of the local oscillation signal generation module 101 are respectively connected with a first output terminal and a second output terminal of the central controller 3, and a power input terminal of the local oscillation signal generation module 101 is connected to a first output terminal of the DC power module 6, an output terminal of the local oscillation signal generation module 101 is connected to a local oscillation frequency input terminal of the first mixer 102 and a local oscillation frequency input terminal of the second mixer 104, both a power input terminal of the first mixer 102 and a power input terminal of the second mixer 104 are connected to a second output terminal of the DC power module 6, an output terminal of the signal preprocessing module 7 is connected to an input terminal of the first mixer 102, an input terminal and an output terminal of the bandpass filter 103 are respectively connected to an output terminal of the first mixer 102 and an input terminal of the second mixer 104, an input terminal and an output terminal of the low pass filter module 105 are respectively connected to an output terminal of the second mixer 104 and an input terminal of the infrared processing chip 7; a control terminal of the central controller 3 is connected to a controlled terminal of the infrared processing chip 7 and a controlled terminal of the digital-to-analog converting module 8, an input terminal and an output terminal of the digital-to-analog converting module 8 are respectively connected to an output terminal of the infrared processing chip 7 and an input terminal of the voice player 9, an output terminal of the signal receiving module 4 is connected to an input terminal of the signal preprocessing module 5. Moreover, the infrared receiver is connected to the DC power module 6, the first output terminal of the DC power module 6 outputs a DC current with an output voltage value of 3.3V, which is provided as a working voltage for the local oscillation signal generation module 101, and the second output terminal of the DC power module 6 outputs a DC current with an output voltage value of 7.8 V, which is provided as a working voltage for the first mixer 102 and the second mixer 104.

Specifically, the signal receiving module 4 is infrared receiving tubes. Each infrared receiving tube receives the subcarrier combined signal in an infrared form transmitted from the infrared radiation unit, converts the subcarrier combined signal in the infrared form into a subcarrier combined signal in the electrical signal form, and outputs the subcarrier combined signal in the electrical signal form to the signal preprocessing module 5. The signal preprocessing module 5 comprises: an amplifier circuit and a filter circuit, but is not limited thereto. The signal preprocessing module 5 preprocesses the received subcarrier combined signal by amplification, and filter, etc. The central controller 3 may be an STM8L15XCX microtroller chip, but is not limited thereto. The infrared processing chip 7 may be a TDIR04 digital infrared processing chip, but is not limited thereto. The digital-to-analog converting module 8 may be a common digital-to-analog converting circuit or a digital-to-analog converter of the same function, but is not limited thereto.

The infrared signal from the infrared radiation unit received by the signal receiving module 4 is amplified and filtered by the signal preprocessing module 5 to obtain the subcarrier combined signal, given that the subcarrier combined signal after be preprocessed by the signal preprocessing module 5 comprises subcarriers of frequencies of f₁ ... fₐ ... fₙ, and given that each path subcarrier in the subcarrier combined signal transmitted from the infrared radiation unit may transmit 4-path audio signal, according to the principle of infrared modulation and the provision of the international standard, frequencies of the subcarriers are 2-8MHz, the subcarrier with a frequency f₁ transmits audio channels 0 to 3, and the subcarrier with a frequency fₐ transmits audio channels 4 to 7, in this embodiment of the present application, it is given that the frequency f₁ is 2.333 MHz and the frequency fₐ is 3 MHz. If the user selects the audio channel 5 via the audio channel selecting key 2, it is known from the above that the subcarrier where the audio channel 5 is transmitted has the frequency fₐ, that is, the user sends a control command of selecting the audio channel 5, via the audio channel selecting key 2, to the central controller 3. The central controller 3 controls the local oscillation signal generation module 101 according to the control command to output a local oscillation signal at a frequency of f₀ to the first mixer 102 and the second mixer 104, and frequency f₀ of the local oscillation signal is obtained by the central controller 3, according to the frequency fₐ of the subcarrier corresponding to the audio channel 5 selected by the user, the center frequency fₘ of the bandpass filter 103, and related algorithms. For example, in this embodiment of the present application, super-heterodyne can be used to calculate f₀, that is, f₀=fₐ+fₘ, given that the center frequency fₘ of the bandpass filter 103 is 10.7MHz, then f₀=fₐ+fₘ= (3+10.7) MHz=13.7MHz, that is, the frequency f₀ of the local oscillation signal is 13.7MHz. After the first mixer 102 receives the subcarrier combined signal comprising frequencies of f₁···fₐ···fₙ preprocessed by the signal preprocessing module 5, the first mixer 102 mixes the above subcarrier combined signal and the local oscillation signal at the frequency of f₀ to output the first sum-difference frequency signal having frequencies of f₀±f₁···f₀±fₐ···f₀±fₙ to the bandpass filter 103. The bandpass filter 103 filters the first sum-difference frequency signal having frequencies of f₀±f₁···f₀±fₐ···f₀±fₙ and outputs the intermediate frequency signal having a frequency of f₀-fₐ (fₘ=f₀-fₐ) that corresponds to the center frequency fₘ of the bandpass filter 103 to the second mixer 104. The second mixer 104 mixes the intermediate frequency signal having the frequency f₀-fₐ (fₘ=f₀-fₐ) with the local oscillation signal having the frequency f₀ output from the local oscillation signal generation module 101 and then outputs the second sum-difference frequency signal having frequencies f₀±f₁=f₀± (f₀-fₐ), that is, fₐ and 2f₀-fₐ, to the low pass filter module 105. The low pass filter module 105 filters the above second sum-difference frequency signal having the frequencies fₐ and 2f₀-fₐ to remove a subcarrier signal having the high frequency band, that is, frequency 2f₀-fₐ, and to output a subcarrier signal having the low frequency band, that is, frequency fₐ. The central controller 3, according to the received audio channel selection command of selecting the audio channel 5, controls the infrared processing chip 7 to process the received single-path subcarrier signal output from the analog frequency selection circuit 1 and then outputs the digital audio signal corresponding to the audio channel 5 to the digital-to-analog converting module 8, and the digital-to-analog converting module 8 converts the digital audio signal corresponding to the audio channel 5 into the analog audio signal, that is, the analog audio signal corresponding to the audio channel 5 is thereafter output to the voice player 9 for voice playing.

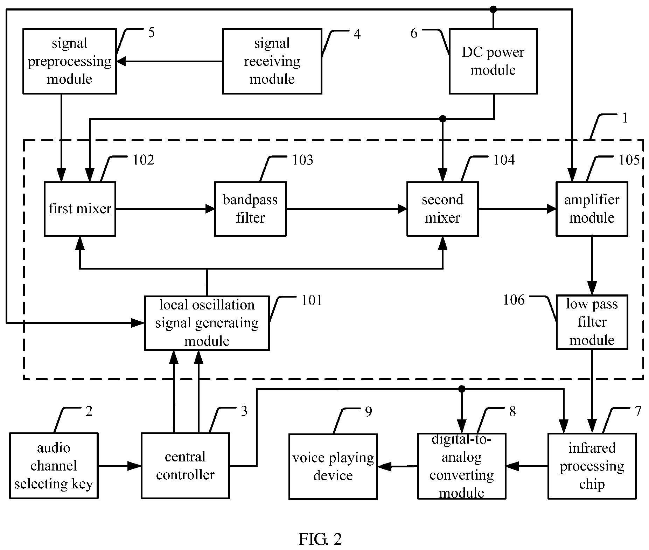

FIG. 2 illustrates another modular structure of the infrared receiver according to an embodiment of the present application. For convenience of description, only those parts related to the embodiment of the present application are shown, which are described in detail as follows:
As an embodiment of the present application, as shown in FIG. 2, on the basis of the modular structure shown in FIG. 1, the analog frequency selection circuit 1 further comprises an amplifier module 106. An input terminal and an output terminal of the amplifier module 106 are respectively connected to an output terminal of the second mixer 104 and an input terminal of the low pass filter module 105, and a power input terminal of the amplifier module 106 is connected to the first output terminal of the DC power module 6. The amplifier module 106 amplifies the second sum-difference frequency signal output from the second mixer 104 and then outputs an amplified second sum-difference frequency signal to the low pass filter module 105. The first output terminal of the DC power module 6 outputs a DC voltage of 3.3V to provide an operating voltage to the amplifier module 106.

In this embodiment of the present application, the amplifier module 106 amplifies the second sum-difference frequency signal having frequencies fₐ and 2f₀-fₐ output from the second mixer 104 and then output the amplified second sum-difference frequency signal to the low pass filter module 105. Therefore, in this embodiment of the present application, the analog frequency selection circuit 1 adopts the amplifier module 106 to amplify the second sum-difference frequency signal having the frequencies fₐ and 2f₀-fₐ output from the second mixer 104 and then to output the amplified second sum-difference frequency signal to the low pass filter module 105, thus, the reception of the high frequency subcarriers for the infrared receiver can be further improved.

In this embodiment of the present application, the central controller 3, according to the audio channel selection command sent from the audio channel selecting key 2, controls the local oscillation signal generation module 101 to output the local oscillation signal to the first mixer 102 and the second mixer 104. The first mixer 102 receives the subcarrier combined signal preprocessed by the signal preprocessing module 5, mixes the preprocessed subcarrier combined signal with the local oscillation signal, and outputs the first sum-difference frequency signal to the bandpass filter 103. The bandpass filter 103 filters the first sum-difference frequency signal and outputs the intermediate frequency signal corresponding to a center frequency of the bandpass filter 103 to the second mixer 104; the second mixer 104 mixes the intermediate frequency signal with the local oscillation signal and outputs second sum-difference frequency signal to the amplifier module 106; the amplifier module 106 amplifies the second sum-difference frequency signal output from the second mixer 104 and then output the amplified second sum-difference frequency signal to the low pass filter module 105. The low pass filter module 105 filters the amplified second sum-difference frequency signal and outputs the single-path subcarrier signal to the infrared processing chip 7. In this embodiment of the present application, both the two frequency conversion processes adopt the same local oscillation signal, which not only can lower the production cost of the infrared receiver, but also can avoid the problem that the use of different local oscillation signals causes errors. In this embodiment of the present application, the signal path subcarrier signal of desired frequency can be obtained by the analog frequency selection circuit 1, so as to avoid the problem that the quantification accuracy of the high frequency band subcarrier would be reduced when the subcarrier combined signal is performed with analog-to-digital conversion by the analog-to-digital converting module within the infrared processing chip 7, thereby solving the defect that the infrared receiver has poor reception of the high frequency band subcarrier. In the meanwhile, based on the second frequency conversion of the second mixer 104, the analog frequency selection circuit 1 of the present application further converts the intermediate frequency signal into the single-path subcarrier signal having a relatively low frequency (the original frequency of the subcarrier) and transmit the single-path subcarrier signal to the infrared processing chip 7. Therefore, the analog-to-digital converting module within the infrared processing chip 7 can work at relatively low frequency (the original frequency of the subcarrier) without increasing the power consumption of the infrared processing chip 7, thereby solving the problem of poor reception of the high frequency band subcarrier while not increasing the power consumption of the whole infrared receiver. Thus, the infrared receiver provided by the present application can solve the problem of poor reception of the high frequency band subcarrier and is also economical and practical.

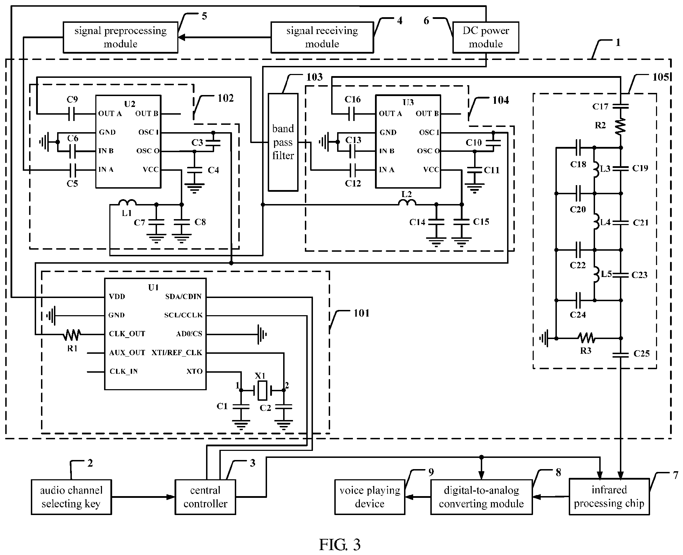

FIG. 3 (corresponding to FIG. 1) illustrates a circuit structure of the infrared receiver provided by an embodiment of the present application, for convenience of description, only those parts related to the embodiment of the present application is shown, which are described in detail as follows:
As an embodiment of the present application, the local oscillation signal generation module 101 comprises a frequency synthesizer chip U1, a first resistor R1, a first capacitor C1, a second capacitor C2, and a crystal oscillator X1.

A power pin VDD of the frequency synthesizer chip U1 is the power input terminal of the local oscillation signal generation module 101, a data pin SDA and a clock signal pin SCL of the frequency synthesizer chip U1 are respectively a first input terminal and a second input terminal of the local oscillation signal generation module 101, a first terminal of the first capacitor C1 and a first terminal of the second capacitor C2 are commonly grounded, a second terminal of the first capacitor C1 and a first terminal of the crystal oscillator X1 are commonly connected to a crystal frequency output pin XTO of the frequency synthesizer chip U1, a second terminal of the second capacitor C2 and a second terminal of the crystal oscillator X1 are commonly connected to a crystal frequency input pin XTI of the frequency synthesizer chip U1, an address selection pin AD of the frequency synthesizer chip U1 is grounded, a ground pin GND of the frequency synthesizer chip U1 is grounded, a clock output pin CLK_OUT of the frequency synthesizer chip U1 is connected to a first terminal of the first resistor R1, a second terminal of the first resistor R1 is an output terminal of the local oscillation signal generation module 101. In this embodiment of the present application, the frequency synthesizer chip U1 may be a frequency synthesizer chip of model CS2000-CP, but is not limited thereto, the frequency synthesizer chip U1 may use the frequency output from the crystal oscillator X1 as a reference frequency. In addition, the crystal oscillator X1 may be a crystal oscillator having a frequency of 11.2896 MHz. The first resistor R1 may be a resistor having a resistance of 330 ohms. Both the first capacitor C1 and the second capacitor C2 may be capacitors having a capacitance of 22 picofarads.

As an embodiment of the present application, the first mixer 102 comprises: a first frequency mixer chip U2, a third capacitor C3, a fourth capacitor C4, a fifth capacitor C5, a sixth capacitor C6, a seventh capacitor C7, an eighth capacitor C8, a ninth capacitor C9, and a first inductor L1.

An oscillation signal input pin OSC_I of the first frequency mixer chip U2 and a first terminal of the third capacitor C3 are commonly connected to form a local oscillation frequency input terminal of the first mixer 102, an oscillation signal output pin OSC_O of the first frequency mixer chip U2 and a second terminal of the third capacitor C3 are commonly connected to a first terminal of a fourth capacitor C4, a second terminal of the fourth capacitor C4 is grounded, a first signal input pin IN_A of the first frequency mixer chip U2 is connected to a first terminal of the fifth capacitor C5, a second terminal of the fifth capacitor C5 is an input terminal of the first mixer 102, a second signal input pin IN_B of the first frequency mixer chip U2 is connected to a first terminal of the sixth capacitor C6, a second terminal of the sixth capacitor C6 and a ground pin GND of the first frequency mixer chip U2 are commonly grounded, a first terminal of the first inductor L1 is a power input terminal of the first mixer 102, a second terminal of the first inductor L1, a first terminal of the seventh capacitor C7, and a first terminal of the eighth capacitor C8 are commonly connected to a power pin VCC of the first frequency mixer chip U2, a second terminal of the seventh capacitor C7 and a second terminal of the eighth capacitor C8 are commonly grounded, a first output pin OUT_A of the first frequency mixer chip U2 is connected to a first terminal of the ninth capacitor C9, and a second terminal of the ninth capacitor C9 is an output terminal of the first mixer 102.

In this embodiment of the present application, the first frequency mixer chip U2 may be a frequency mixer chip of model SA612, but is not limited thereto. The third capacitor C3 may be a capacitor having a capacitance of 5.6 picofarads, the fourth capacitor C4 may be a capacitor having a capacitance of 30 picofarads, the fifth capacitor C5 may be a capacitor having a capacitance of 0.001 microfarads, the sixth capacitor C6 may be a capacitor having a capacitance of 0.1 microfarads, the first inductor L1 may be an inductor of the type MB1608-101, the seventh capacitor C7 may be a capacitor having a capacitance of 0.01 microfarads, the eighth capacitor C8 may be a capacitor having a capacitance of 1 microfarads, the ninth capacitor C9 may be a capacitor having a capacitance of 0.001 microfarads.

As an embodiment of the present application, the bandpass filter 103 is a ceramic bandpass filter or a surface acoustic wave bandpass filter. In this embodiment of the present application, the bandpass filter 103 may be a ceramic filter of model SFECF107HAOOSO-RO having a center frequency of 10.7MHz.

As an embodiment of the present application, the second mixer 104 comprises: a second frequency mixer chip U3, a tenth capacitor C10, an eleventh capacitor C11, a twelfth capacitor C12, a thirteenth capacitor C13, a fourteenth capacitor C14, a fifteenth capacitor C15, a Sixteenth capacitor C16, and a second inductor L2.

An oscillation signal input pin OSC_I of the second frequency mixer chip U3 and a first terminal of the tenth capacitor C10 are commonly connected to form a local oscillation frequency input terminal of the second mixer 104, an oscillation signal output pin OSC_O of the second frequency mixer chip U3 and a second terminal of the tenth capacitor C10 are commonly connected to a first terminal of the eleventh capacitor C11, a second terminal of the eleventh capacitor C11 is grounded, a first signal input pin IN_A of the second frequency mixer chip U3 is connected to a first terminal of the twelfth capacitor C12, a second terminal of the twelfth capacitor C12 is an input terminal of the second mixer 104, a second signal input pin IN_B of the second frequency mixer chip U3 is connected to a first terminal of the thirteenth capacitor C13, a second terminal of the thirteenth capacitor C13 and a ground pin GND of the second frequency mixer chip U3 are commonly grounded, a first terminal of the second inductor L2 is a power input terminal of the second mixer 104, a second terminal of the second inductor L2, a first terminal of the fourteenth capacitor C14, and a first terminal of the fifteenth capacitor C15 are commonly connected to a power pin VCC of the second frequency mixer chip U3, a second terminal of the fourteenth capacitor C14 and a second terminal of the fifteenth capacitor C15 are commonly grounded, a first output pin OUT_A of the second frequency mixer chip U3 is connected to a first terminal of the sixteenth capacitor C16, and a second terminal of the sixteenth capacitor C16 is an output terminal of the second mixer 104.

In the embodiment of the present application, the second frequency mixer chip U3 may be an SA612 chip, but is not limited thereto. The tenth capacitor C10 may be a capacitor having a capacitance of 5.6 picofarads, the eleventh capacitor C11 may be a capacitor having a capacitance of 30 picofarads, the twelfth capacitor C12 may be a capacitor having a capacitance of 0.001 microfarads, the thirteenth capacitor C13 may be a capacitor having a capacitance of 0.1 microfarads, the second inductor L2 may be an inductor of the type MB1608-101, the fourteenth capacitor C14 may be a capacitor having a capacitance of 0.01 microfarads, the fifteenth capacitor C15 may be a capacitor having a capacitance of 1 microfarads, and the sixteenth capacitor C16 may be a capacitor having a capacitance of 0.001 microfarads.

As an embodiment of the present application, the low pass filter module 105 comprises: a seventeenth capacitor C17, a second resistor R2, an eighteenth capacitor C18, a third inductor L3, a nineteenth capacitor C19, a twentieth capacitor C20, a twenty-first capacitor C21, a fourth inductor L4, a twenty-second capacitor C22, a twenty-third capacitor C23, a fifth inductor L5, a twenty-fourth fourteenth capacitor C24, a third resistor R3, and a twenty-fifth capacitor C25.

A first terminal of the seventeenth capacitor C17 is an input terminal of the low pass filter module 105; a second terminal of the seventeenth capacitor C17 is connected to a first terminal of the second resistor R2; a second terminal of the second resistor R2, a first terminal of the third inductor L3, and a first terminal of the eighteenth capacitor C18 are commonly connected to a first terminal of the nineteenth capacitor C19; a second terminal of the nineteenth capacitor C19, a second terminal of the third inductor L3, a second terminal of the twentieth capacitor C20, and a first terminal of the fourth inductor L4 are connected to a first terminal of the twenty-first capacitor C21; a second terminal of the twenty-first capacitor C21, a second terminal of the fourth inductor L4, a second terminal of the twenty-second capacitor C22, and a first terminal of the fifth inductor L5 are commonly connected to a first terminal of the twenty-third capacitor C23; a second terminal of the twenty-third capacitor C23, a second terminal of the fifth inductor L5, a first terminal of the twenty-fourth capacitor C24, and a first terminal of the third resistor R3 are commonly connected to a first terminal of the twenty-fifth capacitor C25; a second terminal of the eighteenth capacitor C18, a second terminal of the twentieth capacitor C20, a second terminal of the twenty-second capacitor C22, a second terminal of the twenty-fourth capacitor C24, and a second terminal of the third resistor R3 are commonly grounded; and a second terminal of the twenty-fifth capacitor C25 is an output terminal of the low pass filter module 105.

In this embodiment of the present application, the seventeenth capacitor C17 may be a capacitor having a capacitance of 0.1 microfarads, the second resistor R2 may be a resistor having a resistance of 49.9 ohms and an accuracy of 1%, the eighteenth capacitor C18 may be a capacitor having a capacitance of 2700 picofarads, the third inductor L3 may be an inductor with an inductance of 1.2 microhenries, the nineteenth capacitor C19 may be a capacitor having a capacitance of 560 picofarads, the twentieth capacitor C20 may be a capacitor having a capacitance of 2700 picofarads, the twenty-first capacitor C21 may be a capacitor having a capacitance of 820 picofarads, the fourth inductor L4 may be an inductor having an inductance of 1.2 microhenries, the second capacitor C22 may be a capacitor having a capacitance of 3300 picofarads, the second thirteen capacitor C23 may be a capacitor having a capacitance of 180 picofarads, the fifth inductor L5 may be an inductor having an inductance of 1.5 microhenries, the twenty-four capacitor C24 may be a capacitor having a capacitance of 2700 picofarads, the third resistor R3 may be a resistor having a resistance of 49.9 ohms and an accuracy of 1%, and the twenty-fifth capacitor C25 may have a capacitance of 0.001 microfarad.

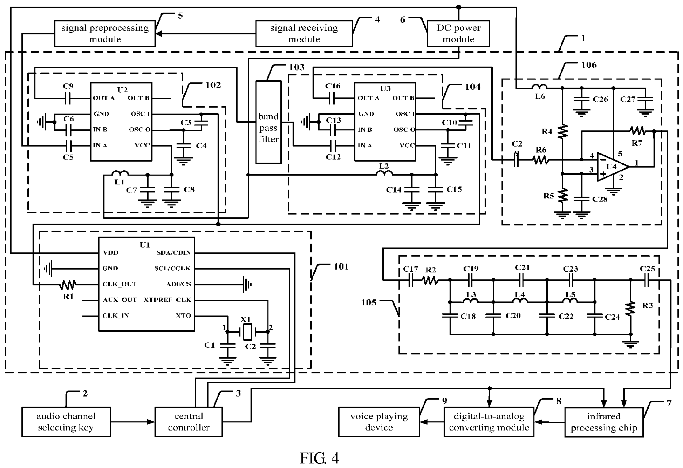

FIG. 4 (corresponding to FIG. 2) shows a circuit structure of an infrared receiver provided by an embodiment of the present application. For the convenience of description, only those parts related to this embodiment of the present application are shown, which are described in detail as follows:
As an embodiment of the present application, the amplifier module 106 comprises: a sixth inductor L6, a twenty-sixth capacitor C26, a twenty-seventh capacitor C27, a twenty-eighth capacitor C28, a fourth resistor R4, a fifth resistor R5, a sixth resistor R6, an amplifier U4, and a seventh resistor R7.

A first terminal of the sixth inductor 106 is a power input terminal of the amplifier module 106; a second terminal of the sixth inductor L6, a first terminal of the fourth resistor R4, a first terminal of the twenty-sixth capacitor C26, and a first terminal of the twenty-seventh capacitor C27 are commonly connected to a first power input terminal 5 of the amplifier U4; a second power input terminal 2 of the amplifier U4 is grounded; a second terminal of the twenty-sixth capacitor C26 and a second terminal of the twenty-seventh capacitor C27 are commonly grounded; a second terminal of the fourth resistor R4, a first terminal of the fifth resistor R5, and a first terminal of the twenty-eighth capacitor C28 are commonly connected to a positive input terminal 3 of the amplifier U4; a second terminal of the fifth resistor R5 and the second terminal of the twenty-eighth capacitor C28 are commonly grounded; a first terminal of the twenty-ninth capacitor C29 is an input terminal of the amplifier module 106; a second terminal of the twenty-ninth capacitor C29 is connected to a first terminal of the sixth resistor R6; a second terminal of the sixth resistor R6 and a first terminal of the seventh resistor R7 are commonly connected to the negative input terminal 4 of the amplifier U4; and an output terminal 1 of the amplifier U4 and a second terminal of the seventh resistor R7 are commonly connected to form an output terminal of the amplifier module 106.

In this embodiment of the present application, the sixth inductor L6 may be an inductor of model MB1608-101, the second-sixteenth capacitor C26 may be a capacitor having a capacitance of 0.1 microfarads, the twenty-seventh capacitor C27 may be a capacitor having a capacitance of 10 microfarads and a withstand voltage of 10 V, the twenty-eighth capacitor C28 may be a capacitor having a capacitance of 0.1 microfarads, the fourth resistor R4 may be a resistor having a resistance of 1000 ohms, the resistor R5 may be a resistor having a resistance of 1000 ohms, the sixth resistor R6 may be a resistor having a resistance of 470 ohms, the amplifier U4 may be an amplifier of model CLC1005IST5X, and the seventh resistor R7 may be a resistor having a resistance of 2200 ohms.

In this embodiment of the present application, the central controller 3, according to the audio channel selection command sent from the audio channel selecting key 2, controls the local oscillation signal generation module 101 to output the local oscillation signal to the first mixer 102 and the second mixer 104. The first mixer 102 receives the subcarrier combined signal preprocessed by the signal preprocessing module 5, mixes the preprocessed subcarrier combined signal with the local oscillation signal, and outputs the first sum-difference frequency signal to the bandpass filter 103. The bandpass filter 103 filters the first sum-difference frequency signal and outputs the intermediate frequency signal corresponding to a center frequency of the bandpass filter 103 to the second mixer 104; the second mixer 104 mixes the intermediate frequency signal with the local oscillation signal and outputs second sum-difference frequency signal to the amplifier module 106; the amplifier module 106 amplifies the second sum-difference frequency signal output from the second mixer 104 and then output the amplified second sum-difference frequency signal to the low pass filter module 105. The low pass filter module 105 filters the amplified second sum-difference frequency signal and outputs the single-path subcarrier signal to the infrared processing chip 7. In this embodiment of the present application, both the two frequency conversion processes adopt the same local oscillation signal, which not only can lower the production cost of the infrared receiver, but also can avoid the problem that the use of different local oscillation signals causes errors. In this embodiment of the present application, the signal path subcarrier signal of desired frequency can be obtained by the analog frequency selection circuit 1, so as to avoid the problem that the quantification accuracy of the high frequency band subcarrier would be reduced when the subcarrier combined signal is performed with analog-to-digital conversion by the analog-to-digital converting module within the infrared processing chip 7, thereby solving the defect that the infrared receiver has poor reception of the high frequency band subcarrier. In the meanwhile, based on the second frequency conversion of the second mixer 104, the analog frequency selection circuit 1 of the present application further converts the intermediate frequency signal into the single-path subcarrier signal having a relatively low frequency (the original frequency of the subcarrier) and transmit the single-path subcarrier signal to the infrared processing chip 7. Therefore, the analog-to-digital converting module within the infrared processing chip 7 can work at relatively low frequency (the original frequency of the subcarrier) without increasing the power consumption of the infrared processing chip 7, thereby solving the problem of poor reception of the high frequency band subcarrier while not increasing the power consumption of the whole infrared receiver. Thus, the infrared receiver provided by the present application can solve the problem of poor reception of the high frequency band subcarrier and is also economical and practical.

Based on the above-mentioned the infrared receiver, the reception of high-frequency subcarriers can be economically and practically enhanced, and an embodiment of the present application also provides an infrared simultaneous interpretation system. The infrared simultaneous interpretation system includes at least one audio signal source, an infrared emission host, and the infrared radiation unit, the infrared simultaneous interpretation system further comprises the above-mentioned infrared receiver.

The foregoing descriptions are merely preferred embodiments of the present application and are not intended to limit the present application. Any modification, equivalent replacement, and improvement made within the spirit and principle of the present application shall be included in the protection of the present application.

## Claims

1. An infrared receiver, the infrared receiver comprising: a central controller, a signal receiving module, a signal preprocessing module, an infrared processing chip, a digital-to-analog converting module, and a voice player; the signal receiving module being configured for receiving an infrared signal and converting the infrared signal into a subcarrier combined signal, which is then preprocessed and output from the signal preprocessing module; the central controller being configured for controlling the infrared processing chip to process a received signal and output a corresponding digital audio signal to the digital-to-analog converting module, and the digital-to-analog converting module being configured for converting the digital audio signal into an analog audio signal and outputting the analog audio signal to the voice player for voice playing; wherein the infrared receiver further comprises an analog frequency selection circuit;
the analog frequency selection circuit comprises: a local oscillation signal generation module, a first mixer, a bandpass filter, a second mixer, and a low pass filter module;
the central controller is configured to control the local oscillation signal generation module to output a local oscillation signal to the first mixer and the second mixer according to an audio channel selection command; the first mixer is configured to receive the subcarrier combined signal preprocessed by the signal preprocessing module, mix the preprocessed subcarrier combined signal with the local oscillation signal, and output a first sum-difference frequency signal to the bandpass filter; the bandpass filter is configured to filter the first sum-difference frequency signal and output an intermediate frequency signal corresponding to a center frequency of the bandpass filter to the second mixer; the second mixer is configured to mix the intermediate frequency signal with the local oscillation signal and output a second sum-difference frequency signal to the low pass filter module; and the low pass filter module is configured to filter the second sum-difference frequency signal and output a single-path subcarrier signal to the infrared processing chip.

2. The infrared receiver of claim 1, wherein the analog frequency selection circuit further comprises an amplifier module; an input terminal and an output terminal of the amplifier module are connected to an output terminal of the second mixer and an input terminal of the low pass filter module, respectively; a power input terminal of the amplifier module is connected to a first output terminal of a DC power module; and the amplifier module is configured to amplify the second sum-difference frequency signal output from the second mixer and output the low pass filter module.

3. The infrared receiver of claim 1, wherein the local oscillation signal generation module comprises:
a frequency synthesizer chip, a first resistor, a first capacitor, a second capacitor, and a crystal oscillator;
a power pin of the frequency synthesizer chip is a power input terminal of the local oscillation signal generation module; a data pin and a clock signal pin of the frequency synthesizer chip are respectively a first input terminal and a second input terminal of the local oscillation signal generation module; a first terminal of the first capacitor and a first terminal of the second capacitor are commonly grounded; a second terminal of the first capacitor and a first terminal of the crystal oscillator are commonly connected to a crystal frequency output pin of the frequency synthesizer chip; a second terminal of the second capacitor and a second terminal of the crystal oscillator are commonly connected to a crystal frequency input pin of the frequency synthesizer chip; an address selection pin of the frequency synthesizer chip is grounded; a ground pin of the frequency synthesizer chip is grounded; a clock output pin of the frequency synthesizer chip is connected to a first terminal of the first resistor; and a second terminal of the first resistor is an output terminal of the local oscillation signal generation module.

4. The infrared receiver of claim 1, wherein, the first mixer comprises:
a first frequency mixer chip, a third capacitor, a fourth capacitor, a fifth capacitor, a sixth capacitor, a seventh capacitor, an eighth capacitor, a ninth capacitor, and a first inductor;
an oscillation signal input pin of the first frequency mixer chip and a first terminal of the third capacitor are commonly connected to form a local oscillation frequency input terminal of the first mixer; an oscillation signal output pin of the first frequency mixer chip and a second terminal of the third capacitor are commonly connected to a first terminal of a fourth capacitor; a second terminal of the fourth capacitor is grounded; a first signal input pin of the first frequency mixer chip is connected to a first terminal of the fifth capacitor; a second terminal of the fifth capacitor is an input terminal of the first mixer; a second signal input pin of the first frequency mixer chip is connected to a first terminal of the sixth capacitor, a second terminal of the sixth capacitor and a ground pin of the first frequency mixer chip are commonly grounded; a first terminal of the first inductor is a power input terminal of the first mixer; a second terminal of the first inductor, a first terminal of the seventh capacitor, and a first terminal of the eighth capacitor are commonly connected to a power pin of the first frequency mixer chip; a second terminal of the seventh capacitor and a second terminal of the eighth capacitor are commonly grounded, a first output pin of the first frequency mixer chip is connected to a first terminal of the ninth capacitor; and a second terminal of the ninth capacitor is an output terminal of the first mixer.

5. The infrared receiver of claim 1, wherein the bandpass filter is a ceramic bandpass filter or a surface acoustic wave bandpass filter.

6. The infrared receiver of claim 1, wherein the second mixer comprises:
a second frequency mixer chip, a tenth capacitor, an eleventh capacitor, a twelfth capacitor, a thirteenth capacitor, a fourteenth capacitor, a fifteenth capacitor, a sixteenth capacitor, and a second inductor;
an oscillation signal input pin of the second frequency mixer chip and a first terminal of the tenth capacitor are commonly connected to form a local oscillation frequency input terminal of the second mixer; an oscillation signal output pin of the second frequency mixer chip and a second terminal of the tenth capacitor are commonly connected to a first terminal of the eleventh capacitor; a second terminal of the eleventh capacitor is grounded; a first signal input pin of the second frequency mixer chip is connected to a first terminal of the twelfth capacitor; a second terminal of the twelfth capacitor is an input terminal of the second mixer; a second signal input pin of the second frequency mixer chip is connected to a first terminal of the thirteenth capacitor; a second terminal of the thirteenth capacitor and a ground pin of the second frequency mixer chip are commonly grounded, a first terminal of the second inductor is a power input terminal of the second mixer; a second terminal of the second inductor, a first terminal of the fourteenth capacitor, and a first terminal of the fifteenth capacitor are commonly connected to a power pin of the second frequency mixer chip; a second terminal of the fourteenth capacitor and a second terminal of the fifteenth capacitor are commonly grounded; a first output pin of the second frequency mixer chip is connected to a first terminal of the sixteenth capacitor; and a second terminal of the sixteenth capacitor is an output terminal of the second mixer.

7. The infrared receiver of claim 1, wherein the low pass filter module comprises:
a seventeenth capacitor, a second resistor, an eighteenth capacitor, a third inductor, a nineteenth capacitor, a twentieth capacitor, a twenty-first capacitor, a fourth inductor, a twenty-second capacitor, a twenty-third capacitor, a fifth inductor, a twenty-fourth capacitor, and a twenty-fifth capacitor;
a first terminal of the seventeenth capacitor is an input terminal of the low pass filter module; a second terminal of the seventeenth capacitor is connected to a first terminal of the second resistor; a second terminal of the second resistor, a first terminal of the third inductor, and a first terminal of the eighteenth capacitor are commonly connected to a first terminal of the nineteenth capacitor; a second terminal of the nineteenth capacitor, a second terminal of the third inductor, a second terminal of the twentieth capacitor, and a first terminal of the fourth inductor are connected to a first terminal of the twenty-first capacitor; a second terminal of the twenty-first capacitor, a second terminal of the fourth inductor, a second terminal of the twenty-second capacitor, and a first terminal of the fifth inductor are commonly connected to a first terminal of the twenty-third capacitor; a second terminal of the twenty-third capacitor, a second terminal of the fifth inductor, a first terminal of the twenty-fourth capacitor, and a first terminal of the third resistor are commonly connected to a first terminal of the twenty-fifth capacitor; a second terminal of the eighteenth capacitor, a second terminal of the twentieth capacitor, a second terminal of the twenty-second capacitor, a second terminal of the twenty-fourth capacitor, and a second terminal of the third resistor are commonly grounded; and a second terminal of the twenty-fifth capacitor is an output terminal of the low pass filter module.

8. The infrared receiver of claim 2, wherein the amplifier module comprises:
a sixth inductor, a twenty-sixth capacitor, a twenty-seventh capacitor, a twenty-eighth capacitor, a fourth resistor, a fifth resistor, a sixth resistor, an amplifier, and a seventh resistor; and
a first terminal of the sixth inductor is a power input terminal of the amplifier module; a second terminal of the sixth inductor, a first terminal of the fourth resistor, a first terminal of the twenty-sixth capacitor, and a first terminal of the twenty-seventh capacitor are commonly connected to a first power input terminal of the amplifier; a second power input terminal of the amplifier is grounded; a second terminal of the twenty-sixth capacitor and a second terminal of the twenty-seventh capacitor are commonly grounded; a second terminal of the fourth resistor, a first terminal of the fifth resistor, and a first terminal of the twenty-eighth capacitor are commonly connected to a positive input terminal of the amplifier; a second terminal of the fifth resistor and the second terminal of the twenty-eighth capacitor are commonly grounded; a first terminal of the twenty-ninth capacitor is an input terminal of the amplifier module; a second terminal of the twenty-ninth capacitor is connected to a first terminal of the sixth resistor; a second terminal of the sixth resistor and a first terminal of the seventh resistor are commonly connected to the negative input terminal of the amplifier; and an output terminal of the amplifier and a second terminal of the seventh resistor are commonly connected to form an output terminal of the amplifier module.

9. An infrared simultaneous interpretation system, the infrared simultaneous interpretation system comprising at least one audio signal source, an infrared emission host, and an infrared radiation unit, wherein the infrared simultaneous interpretation system further comprises the infrared receiver of any of claims 1-8.
